# EUROPEAN PATENT APPLICATION

(11) **EP 4 683 268 A2**
(43) Date of publication of application: **21.01.2026**
(21) Application number: 25221275.8
(22) Date of filing: 23.10.2023
(51) Int. Cl.: H04L 9/00

(54) **DIGITAL ASSETS PLATFORM**

(30) Priority: 23.10.2022 US 202263380573 P; 26.10.2022 US 202263381125 P
(62) Divisional of application: 23882071.6
(71) Applicant: Goldman Sachs & Co. LLC, New York, NY 10282 (US)
(72) Inventor: The designation of the inventor has not yet been filed
(74) Representative: Boult Wade Tennant LLP

(57) **Abstract**

A digital assets platform (DAP) uses distributed ledger technology and smart contract programming. The DAP can include distributed and decentralized communication network and application systems that collectively provide end-to-end tokenization, management, and lifecycle processing of digital assets. The assets may be digitally native securities (e.g., bonds, equities, funds, etc.) and non-securities (e.g., digital cash, loans, derivatives), tokenization of real-world assets (securities and non-securities), or any other forms of tokenized assets.

## Description

### CROSS-REFERENCE TO RELATED APPLICATIONS

This Application claims the benefit of U.S. Provisional Patent Application No. 63/380,573, filed October 23, 2022, and 63/381,125, filed on October 26, 2022, both of which are incorporated by reference.

### TECHNICAL FIELD

The disclosure relates generally to the field of distributed ledger technology (DLT), and, in particular, to a digital assets platform that can provide end-to-end registry, custody, issuance, trading, settlement, and servicing of digital assets and tokenized assets.

### BACKGROUND

Distributed ledger technology (e.g., blockchains) was developed as a means for parties to engage in transactions, e.g., financial transactions, without the need for a single, centralized authority or intermediary. In such DLT-based systems, each transaction is recorded independently by several nodes. In some implementations, no single entity controls all of the nodes so it is exceedingly difficult for a malicious actor to alter the transaction once it has been recorded by the nodes. Even in implementations where a single entity controls all of the nodes, it is still exceedingly difficult to alter the data recorded on sufficient nodes to change the consensus indicated by all of the nodes without leaving an indication that the data has been tampered with.

There are many scenarios where it is desirable for parties to exchange digital assets, either for other digital assets, cash, or non-digital assets. Market participants desire a wide range of functionality with digital assets to mirror the rich tapestry of financial products that are possible with conventional, non-digital approaches. However, conventional digital asset systems provide only a patchwork of functionality that meet only a subset of the demands financial market participants. Furthermore, regulatory requirements vary by jurisdiction meaning that systems developed to serve market participants in one place may not be viable solutions in another where the regulatory requirements differ. Thus, there is a need for a new piece of DLT based Financial Market Infrastructure (FMI) that addresses intra and inter jurisdictional fragmentation and inefficiency in existing digital asset systems that provides, for example, providing end-to-end registry, custody, issuance, trading, settlement, and servicing of digital assets and tokenized assets (including securities and non-securities).

### SUMMARY

The above and other problems may be solved by a digital assets platform ("DAP" or the "platform") that uses distributed ledger technology (DLT) and smart contract programming. The DAP can include distributed and decentralized communication network and application systems that collectively provide end-to-end tokenization, management, and lifecycle processing of digital assets. The assets may be digitally native securities (e.g., bonds, equities, funds, etc.) and non-securities (e.g., digital cash, loans, derivatives), tokenization of real-world assets (securities and non-securities), or any other forms of tokenized assets (collectively, "digital assets").

To comply with regulatory requirements with respect to securities and non-securities in many jurisdictions, the platform may use a permissioned DLT network (e.g., a permissioned private or consortium blockchain) for which the nodes are hosted and operated by recognized and legitimate institutions (e.g., regulated financial institutions). In various embodiments, the platform uses smart contracts to provide one or more of: a role and service management engine, primary issuance of digital assets, secondary trading of digital assets, registry and custody of securities and non-securities, digital asset transaction settlement (e.g., cross-tier atomic settlement), account and portfolio management, and asset servicing (e.g., coupon generation and processing, redemption processing, splitting and merging of securities, etc.).

### BRIEF DESCRIPTION OF THE DRAWINGS

The disclosed embodiments have advantages and features which will be more readily apparent from the detailed description, the appended claims, and the accompanying figures (or drawings). A brief introduction of the figures is below.
FIG. 1 is a block diagram that illustrates a networked computing environment suitable for providing end-to-end registry, custody, issuance, trading, settlement, and servicing of digital assets and tokenized assets, according to one embodiment.
FIG. 2 is a block diagram of the digital assets platform of FIG. 1, according to one embodiment.
FIG. 3 is a flowchart of a method for assigning roles to entities within the platform, according to one embodiment.
FIG. 4 is a flowchart of a method for creating an account with the platform, according to one embodiment.
FIG. 5 is a flowchart of a method for a primary issuance, according to one embodiment.
FIG. 6 is a flowchart of a method for asset origination, according to one embodiment.
FIG. 7 is a flowchart of a method for asset issuance, according to one embodiment.
FIG. 8 is a flowchart of a method for processing a transaction, according to one embodiment.
FIG. 9 is a block diagram of a set of accounts using hierarchical claim tokens to provide secondary and tertiary interests in a digital asset, according to one embodiment.
FIG. 10 is a flowchart of a method for waterfalling coupon payments through an account hierarchy, according to one embodiment.
FIG. 11 is a flowchart of a method for integrating off-chain systems with the platform to provide transaction verification, according to one embodiment.
FIG. 12 is a block diagram of an example of a computer suitable for use in the networked computing environment of FIG. 1, according to one embodiment.

### DETAILED DESCRIPTION

The figures and the following description describe certain embodiments by way of illustration only. One skilled in the art will readily recognize from the following description that alternative embodiments of the structures and methods may be employed without departing from the principles described. Wherever practicable, similar or like reference numbers are used in the figures to indicate similar or like functionality. Where elements share a common numeral followed by a different letter, this indicates the elements are similar or identical. A reference to the numeral alone generally refers to any one or any combination of such elements, unless the context indicates otherwise.

### OVERVIEW

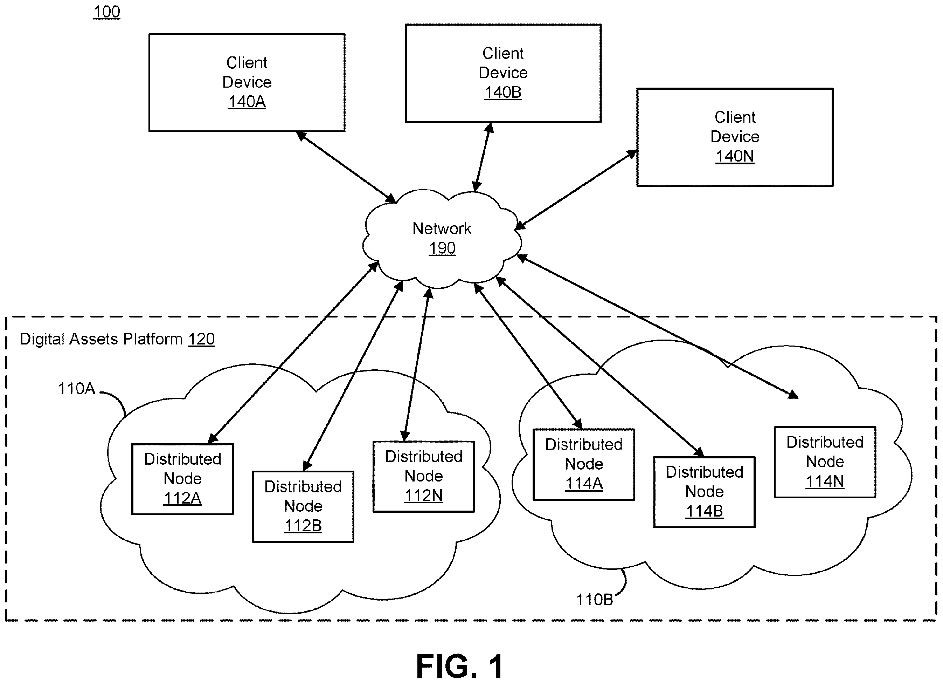

FIG. 1 illustrates one embodiment of a networked computing environment 100 environment suitable for providing end-to-end registry, custody, issuance, trading, settlement, and servicing of digital assets and tokenized assets. In the embodiment shown, the networked computing environment 100 includes a digital assets platform 120, one or more distributed ledgers 110, and one or more client devices 140, all connected via a network 190. In other embodiments, the networked computing environment 100 includes fewer, different, or additional elements. In addition, the functions may be distributed among the elements in a different manner than described.

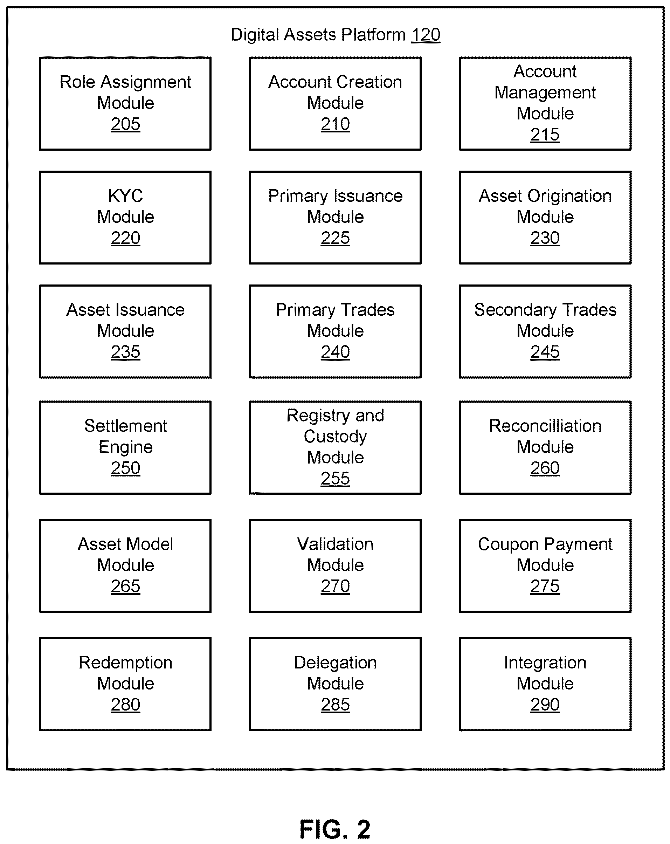

The digital assets platform 120 includes one or more computing devices that collectively provide functionality for digital and tokenized assets, including end-to-end registry, custody, issuance, trading, settlement, and servicing of those assets. These computing devices include the nodes of one or more distributed ledgers (e.g., distributed ledger 110A or 110B). The digital assets platform 120 provides information to drive user interfaces (e.g., at client devices 140) for market participants to make transactions involving digital assets. The digital assets platform 120 creates and manages smart contracts on one or more distributed ledgers 110 (e.g., blockchains) to provide the aforementioned functionality. Various embodiments of the digital assets platform 120 are described in greater detail below, with reference to FIG. 2.

The distributed ledgers 110 provide an immutable record indicating the current and historical ownership of digital and tokenized assets. The distributed ledgers also contain smart contracts that provide functionality regarding the digital and tokenized assets. FIG. 1 shows two distributed ledgers 110A and 110B for illustrative purposes. In practice, the networked computing environment 100 may include any number of distributed ledgers. For example, in one embodiment, a single, permissioned distributed ledger is used to store all digital assets and smart contracts while in another embodiment, the platform may support multiple types of digital asset, each of which is stored on its own distributed ledger. Furthermore, in some embodiments, the platform may use a separate distributed ledger for storing smart contracts than those used to stored digital or tokenized assets.

In FIG. 1, the first distributed ledger 110A is shown as including three distributed nodes 112, a first distributed node 112A, a second distributed node 112B, and an Nth distributed node 112N. Similarly, the second distributed ledger 110B is shown as including a first distributed node 114A, a second distributed node 114B, and an Nth distributed node 114N. In practice, each distributed ledger 110 can (and likely will) include many more nodes.

The distributed nodes 112, 114 are computing devices. The distributed nodes may manage and provide a blockchain or other type of distributed ledger. The distributed nodes can also store and execute the rules set by a smart contract. Thus, when the triggering conditions of a smart contract are met, one or more operations may be automatically performed by the distributed nodes 112, 114. When an event or data relevant to a smart contract is generated, relevant information may be added to a block of the blockchain. The blockchain and smart contract can codify and automatically enforce rules governing ownership of and investment in digital assets.

When a distributed node 112 or 114 receives a request to conduct a transaction it confirms or denies whether the relevant data of the transaction is consistent with its records. A transaction is considered successfully verified if a threshold amount of the distributed nodes agree that the transaction is consistent with their records. For example, a Byzantine fault tolerance approach may be used to determine whether sufficient nodes confirm the validity of a transaction to verify the transaction. Similarly, an action defined in a rule of a smart contract may be triggered if a threshold amount of the distributed nodes agree that a triggering condition for the action has been met.

A distributed ledger 110 generally takes one the following forms:
- A single global ledger which is maintained by all the nodes within the blockchain network; or
- A global ledger which is made up of multiple local ledgers which are maintained by the individual nodes within the network.

In DLT embodiments that use a single global ledger, when a change to the blockchain is made (e.g., when a new transaction or block is created), the nodes form a consensus as to how the change is integrated into the network of distributed nodes. Upon consensus, the agreed upon change is considered confirmed such that each node maintains a copy that should match the copies stored by other nodes. Any change that does not achieve a consensus may be ignored. Accordingly, unlike a traditional, centralized ledger, a single party cannot unilaterally alter the blockchain.

In embodiments of DLT that use a global ledger made up of multiple local ledgers, when a transaction is submitted to the network, the involved nodes validate and provide the confirmation of the validity of the transaction. Upon consensus, the agreed upon change is considered confirmed and shall be used to update the contract states within the local ledger of the relevant nodes. Unlike in embodiments that use a single global ledger, each of the nodes maintains its own private state of the ledger, which collectively forms the global ledger.

The blockchain may also include smart contracts, which are a set of executable instructions stored in conjunction with one or more triggering conditions. If the triggering conditions are met, the smart contract is triggered to execute the corresponding instructions. Each distributed node 112, 114 may receive the definition of a smart contract but any outcomes resulting from execution of the code within the smart contract are only validated if consensus is reached among the nodes as to the state of the smart contract (e.g., sufficient nodes agree that the triggering conditions have been met and execution of the instructions leads to a particular outcome). In other embodiments, other types of distributed ledger may be used.

The client devices 140 are computing devices with which users may interact with the digital assets platform 120 or a distributed ledger, such as distributed ledger 110A or distributed ledger 110B. Although three client devices (a first client device 140A, a second client device 140B, and an Nth client device 140N) are shown, in practice, the networked computing environment 100 can include any number of such devices. In one embodiment, the client devices 140 provide a user interface (e.g., in a browser or via a dedicated app) with which market participants can provide details of transactions, apply their digital signatures to transactions, view their prior activity on the platform, and access other functionality of the platform (such as any of the functionality described below).

The network 190 provides the communication channels via which the other elements of the networked computing environment 100 communicate. The network 190 can include any combination of local area or wide area networks, using both wired or wireless communication systems. In one embodiment, the network 190 uses standard communications technologies or protocols. For example, the network 190 can include communication links using technologies such as Ethernet, 802.11, worldwide interoperability for microwave access (WiMAX), 3G, 4G, 5G, code division multiple access (CDMA), digital subscriber line (DSL), etc. Examples of networking protocols used for communicating via the network 190 include multiprotocol label switching (MPLS), gRPC Remote Procedure Calls (GRPC), transmission control protocol/Internet protocol (TCP/IP), hypertext transport protocol (HTTP), simple mail transfer protocol (SMTP), and file transfer protocol (FTP). Data exchanged over the network 190 may be represented using any suitable format, such as hypertext markup language (HTML) or extensible markup language (XML). In some embodiments, all or some of the communication links of the network 190 may be encrypted using any suitable technique or techniques.

### EXAMPLE DIGITAL ASSETS PLATFORM

FIG. 2 illustrates one embodiment of the digital assets platform 120. In the embodiment shown, the platform 120 includes a role assignment module 205, an account creation module 210, an account management module 215, a KYC module 220, a primary issuance module 225, an asset origination module 230, an asset issuance module 235, a primary trades module 240, a secondary trades module 245, a settlement engine 250, a registry and custody module 255, a reconciliation module 260, an asset model module 265, a validation module 270, an coupon payment module 275, a redemption module 280, a delegation module 285, and an integration module 290. In other embodiments, the platform 120 includes different or additional elements. Furthermore, the functionality may be distributed between the components of the platform 120 differently than described. For example, a single module may handle origination and issuance.

The role assignment module 205 manages what roles different entities serve on the platform 120. The following are example roles that an entity may have:
- Operator: Responsible for the maintenance of on-DLT DAP including administrative functioning. The Operator has control of role assignment (i.e., granting different entities a platform role, which enables specific functionality depending on the respective service assigned).
- Issuer: Triggers on-DLT / on-chain digital asset origination and issuance processes. An Issuer may also delegate the origination and issuance processes to the Registrar.
- Registrar: Approves asset origination issuance processes and maintains integrity of issued asset. The Registrar may also provide oversight and management of custodial accounts.
- Distributor: A Distributor may provide a lead bank service that manages primary issuance, book building, and allocation. A Distributor may also provide a syndicate bank service that is responsible for participating in the primary issuance workflow, on-boarding investors and submitting orders.
- Paying Agent: Identifies the coupon rate for a particular payment date, receives the net coupon amount from Issuer, and distributes eligible coupon amounts to Investors.
- Settlement Agent: Generates settlement instructions and executes atomic settlement.
- Cash Token Manager: provides digital cash origination and issuance for digital cash tokens represented on-chain.
- Distributor/Syndicate Bank: Responsible for participating in the primary issuance workflow, on-boarding investors, and submitting orders.
- Custodian: Responsible for reviewing and approving on-chain settlement instructions on behalf of investors. A Custodian safeguards and administers assets on behalf of Investors.
- Investor: Enables clients to submit primary or secondary market orders, Indications of Interest (IOIs), Requests for Quote (RFQs), and Requests for Tender (RFTs) as well as approves settlement instructions. An Investor may also access portfolio / account management services to review its digital asset holding on-chain. In some embodiments, an Investor may also delegate its account and settlement obligations and functions to the Custodian.
- Oracle: Provides the platform a link to off-chain reference data feeds, *e.g.,* calendar, benchmarks, and legal entity data.
- Secondary Trader: Create/Delete IOIs, orders, or RFQ/RFTs, provide liquidity facilitation to the investors and the market.

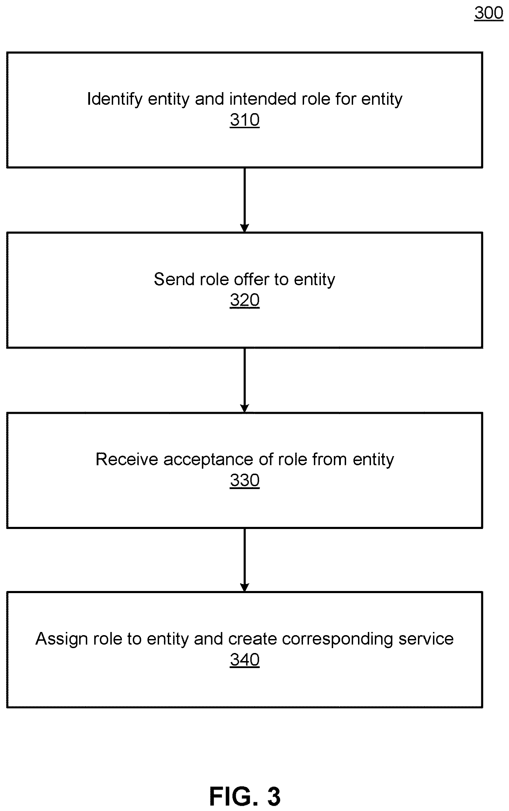

Assignment of roles may be centralized or decentralized. FIG. 3 illustrates an example method 300 for assigning a role to an entity using a centralized approach, according to one embodiment. In the embodiment shown, the method 300 begins with the role assignment module 205 identifying 310 an entity and an intended role for that entity. The entity may be identified 310 by a user providing a Legal Entity Identifier (LEI) or other identifier of the entity while the role may be identified by a text string representing the name of the role or another unique identifier of the role.

The role assignment module 205 sends 320 a role offer to the entity by creating a smart contract on the distributed ledger for the entity and role. The entity may be notified of the creation of the offer smart contract with a message sent to a client device 140 associated with the entity, such as by sending an email, instant message, or other type of message to an account of the entity that can be accessed at a client device 140 (e.g., by providing credentials of the entity). Assuming the entity agree to accept the role by signing the offer smart contract, the entity is assigned 340 the role. The role may be assigned by creating a role smart contract identifying the entity (e.g., by its LEI) and the role (e.g., y the role name) and archiving the offer smart contract. The role assignment module 205 may also create a service smart contract that includes the code for the entity to perform the actions associated with the assigned role. Alternatively, other data structures may be used to identify roles assigned to entities and define allowable actions.

The role assignment module 205 may also assign roles to specific issuances. In one embodiment, identifiers of entities and the role or roles they serve with regard to an issuance are stored in smart contracts or other data objects associated with the issuance. When an entity attempts to perform an action relating to the issuance the role assignment module 205 may check whether the entity both has the relevant role assigned to it (globally) and that it has been assigned that role for the specific issuance.

In decentralized embodiments, a similar approach may be adopted in which, rather than a single entity assigning roles, any entity ca take on a new role of being a Product Admin that allows the entity to determine what roles different parties will play in the context of a one issuance (e.g., an entity can be a lead bank in one issuance and an investor in another with their functionality and restrictions being derived always within the context of the issuance they are operating on). Entities still accept or approve their functional roles for an issuance but may do so without having specific role smart contract stored on-chain to capture those approvals. Rather, the roles played by entities for an issuance can be stored in association with an identifier of that issuance.

In a decentralized configuration, the platform 120 provides three protections against malicious or unintended use. First, a model for confirming an entity is authorized to act on a particular issuance is provided at the API layer through which entities interact with the platform. Second, although any entity can be a product administrator and assign roles for an issuance, legally binding transfers of assets only occur when all parties sign the transaction. Third, if a malicious or accidental function is performed, the node operator retains emergency powers to block access to users and remove any contracts determined to be invalid for any reason.

Referring back to FIG. 2, the account creation module 210 module creates accounts for entities that use the platform. In one embodiment, account creation involves two parties, an account provider and an account owner. An account provider is an entity that has the Custodian role while an account owner may be any entity on the platform 120. The account is represented on chain by a smart contract that includes identifiers of the account, provider, and owner, as well as the KYC status of the account. Generally, it is the responsibility of the account provider to maintain/update the KYC status of the account.

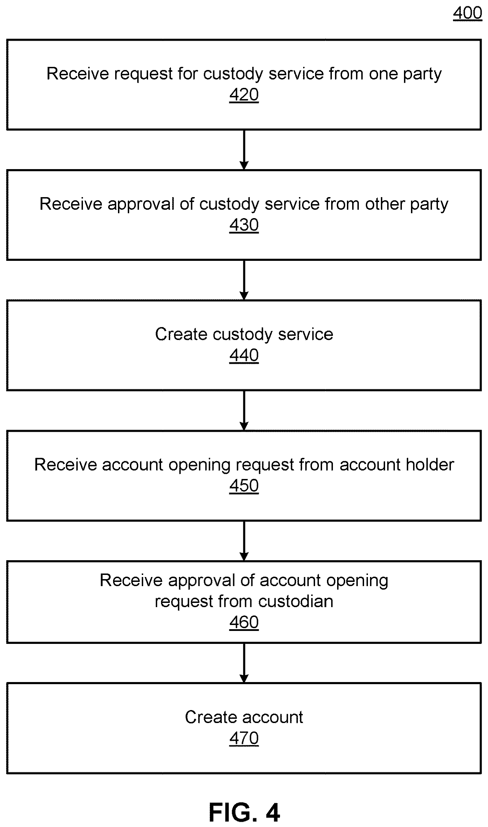

FIG. 4 illustrates an example method 400 for creating an account on the platform 120, according to one embodiment. In the embodiment shown, the method 400 begins with the account creation module 210 receiving 420 a custody request from one of the parties (e.g., the account owner or the custodian). The custody request may be represented by a smart contract stored on chain. The account creation module 210 receives 430 approval of the custody request from the other party. Approval may be provided by the other party signing the smart contract. When the other party signs, the custody relationship may be created on-chain by creating 440 a custody service smart contract. The custody request smart contract may be archived at this time. Similarly, if the custody request was received from the custodian and identifies an account owner, when the account owner signs the custody request smart contract, the account creation module 210 creates 440 a custody service smart contract (and may archive the custody request smart contract). The custody service smart contract includes the code for providing the custody service functionality. The account creation module 210 also receives 450 an account creation request from the account owner, which creates an account request smart contract. On receiving 460 approval of the account creation request by the custodian signing the account request smart contract, the account creation module 210 creates 470 the account (which is a smart contract) and may archive the account request smart contract. The account smart contract includes the information about the account described previously.

Referring back to FIG. 2, the account management module 215 provides a user interface (e.g., via a client device 140) with which account owners can manage how their accounts are used. In one embodiment, entities can hold multiple accounts on the platform from different account providers and uses the interface provided by the account management module 215 to specify the default accounts that are used for settlement in various circumstances. For example, an account holder may specify: a default securities account, a default cash account, a default omnibus securities account (if the account holder is a securities custodian), a default omnibus cash account (if the account holder is a cash custodian), and any other default accounts for specified types of assets, depending on the specific use case. An account holder's default account selections may be stored on the distributed ledger in a smart contract. At settlement time, the settlement agent may use the smart contract to look up what accounts should be used and generate settlement instructions accordingly.

The KYC module 220 provides an interface (e.g., via a client device 140) for account providers to update the KYC status of accounts. The account providers can operate their usual KYC procedures off chain and of there is a change in the KYC status of an account holder, the account provider may use the interface provided by the KYC module 220 to add a new smart contract to the distributed ledger (which supersedes any earlier smart contract for the account) indicating the updated KYC status. Alternatively, the smart contract for an account may indicate an off-chain location where the KYC status of the account is stored and the account provider may update the KYC status stored at that location, automatically making the updated KYC status available on chain.

The primary issuance module 225 manages primary issuances of one or more issuances (e.g., tranches) of a digital asset as part of a deal. In one embodiment, the primary issuance process starts off with the lead party/parties (e.g., a lead bank for a syndicate issuance) creating the deal. The deal is defined as a collection of one or more issuances grouped under the same issuer and lead bank party. Each issuance represents an issuance lifecycle (e.g., a syndicate issuance, a private placement issuance, a municipal bond issuance, etc.) with different sets of participants and digital assets involved. The primary issuance and book building workflows are decoupled from the digital assets instrument to achieve maximum flexibility. Within each issuance, the lead party specified is responsible for managing the issuance workflow. The workflow can also be configured to include different visibility levels, book building stages, allowed participants, and actions.

During the issuance process, the lead party updates the issuance with different states to represent the different stage of the issuance (e.g., announced, book open, book closed, launched, allocated, priced, cancelled). For each issuance, the allocation and price discovery can be set to manual with the help of an underwriter or crowd sourced through auctions. The book building process can be completed on-chain or performed off-chain and then fed into the platform 120 and recorded on the ledger via directly using the platform UI or API to manage and execute the book building on-chain or integration with a traditional book-building system that feeds the resulting deals, orders, and allocation information into the platform 120 to be recorded on the distributed ledger.

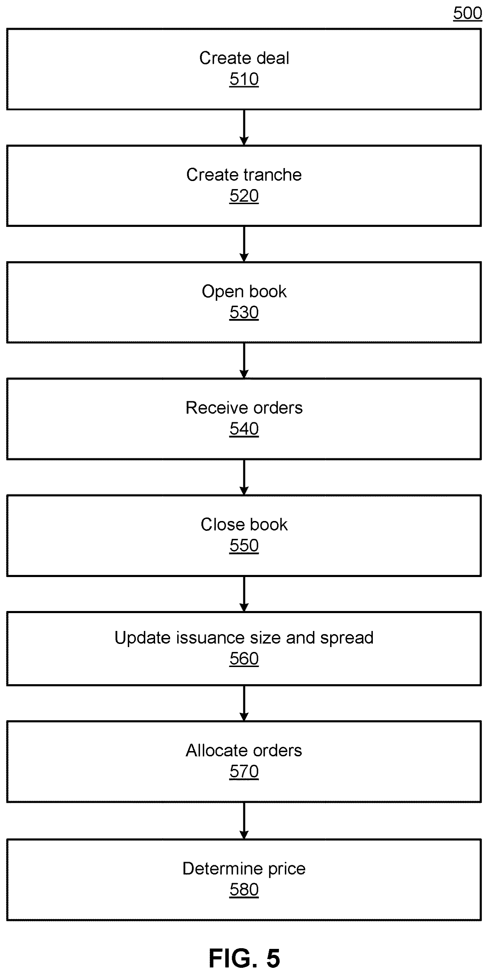

FIG. 5 illustrates a method 500 for a primary issuance, according to one embodiment. The method is described from the perspective of the primary issuance module 225 performing the method 500, but it should be understood that the steps are performed at the direction of the lead bank for the deal (e.g., in response to instructions provided via a user interface at a client device 140 of the lead bank) unless it is specified otherwise.

In the embodiment shown, the method 500 begins with the primary issuance module 225 creating 510 a deal and then creating 520 a issuance for the deal. The book is opened 530 and the primary issuance module 225 receives 540 orders from syndicate banks and/or other investors. The orders may be stored on chain. When one or more conditions are met (e.g., at a specified time), the primary issuance module 225 closes 550 the book and updates 560 the issuance size and spreads based on the orders. The primary issuance module 225 allocates 570 orders and determines 580 the price based on the allocated orders.

Once the price for an issuance has been set, the asset origination module 230 and the asset issuance module 235 work together to issue the digital assets. Asset origination and issuance on the platform 120 involves two parties, the issuer and the registrar. In one embodiment, issuance and instrument services are established between the issuer and registrar before Asset origination and issuance commences. Assuming that the required services are in place, issuance and origination of the digital assets are treated as two distinct processes. Origination creates a smart contract that includes a description of the digital asset (or an instrument defining the digital asset) but does not denote the legal creation or ownership of a digital asset. In contrast, issuance creates tokens that represent instances of the digital asset and assigns ownership of those tokens on chain. The individual tokens do not include the description of the digital asset but rather refer back to the smart contract created during origination. Thus, only one instance of the description of the digital asset is stored on chain, which can improve efficiency and eliminate the risk of inconsistent definitions between instances.

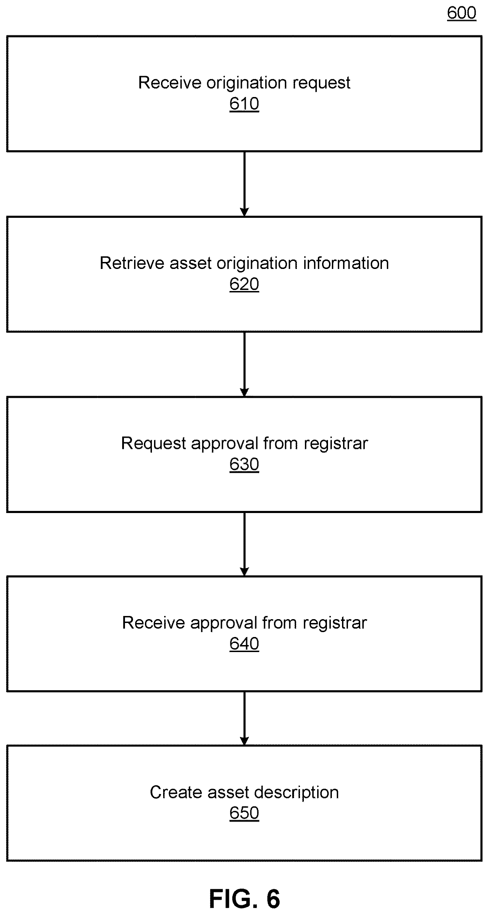

FIG. 6 illustrates an example method 600 for originating a digital asset, according to one embodiment. In the embodiment shown, the method 600 begins with the asset origination module 230 receiving 610 an origination request from the issuer of the digital asset. The asset origination module 230 retrieves 620 information about the asset from the issuance defined by the primary issuance module 225. The asset origination module 230 requests 630 approval for the origination from the registrar. The request for approval may include information about the asset that is provided to a client device 140 of the registrar that enables verification that the origination is consistent with the information about the issuance in the registry. The request for approval may be made by creating an approval smart contract on the distributed ledger. Assuming the registrar does not find any problems with the request, the asset origination module 230 receives 640 approval from the registrar (e.g., by the registrar signing the approval smart contract) and creates 650 a description of the asset. The description is a dataset detailing characteristics of the digital asset. The dataset can be stored on chain in a smart contract.

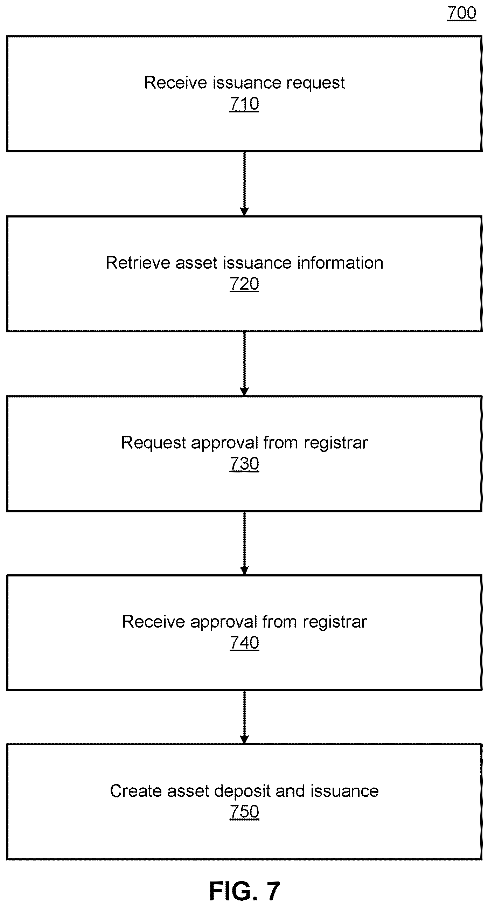

FIG. 7 illustrates an example method 700 for issuance of a digital asset, according to one embodiment. In the embodiment shown, the method 700 begins with the asset issuance module 235 receiving 710 an issuance request from the issuer of the digital asset. The asset issuance module 235 retrieves 720 information about the asset issuance from the issuance request and provides 730 the issuance request to the registrar for approval. Assuming that the registrar does not identify any problems with the issuance request, the registrar sends an approval of the issuance request that is received 740 by the asset issuance module 235. The asset issuance module 235 then creates 750 the asset deposit and the issuance. The issuance is one or more instances of the asset described by the dataset created for that asset by the asset issuance module 230. The asset deposit is an instance of the digital asset credited to the issuer's account that represents the pending issuance while the issuance is a record of the number of digital assets issued. The combination of the asset deposit account and the issuance provides a check that the amount of digital assets the issuer intended to issue match the amount of digital assets actually issued (i.e., held by entities in the platform).

Referring again to FIG. 2, the primary trades module 240 manages primary trades of digital assets. In one embodiment, the primary trade module 240 supports a wide variety of trades that may be structured with various hierarchies (including a flat issuance scheme with no hierarchy). Example types of trades that are supported include: (1) takedown trades (trades between the issuer and lead bank to take down the full issuance); (2) investor trades (trades between investors and banks to purchase digital assets); (3) residual trades (sharing of residual unallocated assets between syndicate banks in the event of an undersubscription); (4) broker trades (trades between the lead bank and a syndicate bank to allow the syndicate bank to settle directly with its own investors); and (5) direct allocation trades (trades between the issuer and the investor). The lead bank can book these primary trades in the platform 120 based on the issuance size as well as the investors' orders submitted during the book building phase.

Once trades are booked, a settlement agent can generate settlement instructions for the trades. In one embodiment, the settlement instructions are generated by traversing a custodial hierarchy tree using an algorithm that ensures there is a valid path between the buyer and the seller. The generation of settlement instructions can be manually triggered or automated based on one or more criteria having been met. The settlement instructions are generated based on the information retrieved from the trades and the settlement information of the respective counterparties. The settlement instructions are then signed by the relevant parties (e.g., buyer, seller, custodians), and proceed to the assets settlement transfer (e.g., DvP / FoP).

The secondary trades module 245 enables trading of ownership and beneficial interests in digital assets in a secondary market. In one embodiment, the secondary trades module 245 provides a bulletin board (e.g., accessible via client devices 140) on which secondary traders may post IOIs for digital assets. If another secondary trader is interested in the IOI, the secondary traders can discuss and, assuming they can agree on terms, agree to a trade. Once the two parties have agreed, either one of them can initiate creation of a trade recap. Once a party creates a request for a trade recap using the user interface, the other party can confirm that submission. Assuming confirmation is provided, a settlement agent initiates settlement, starting with the creation of a trade. From there, the settlement proceeds in the same way as in primary issuance or any other trading context.

In one embodiment, the secondary trades module 245 provides efficient trade recap matching. In conventional trade-matching systems that do not involve a distributed ledger, the system can query a database of trade information for all trades that meet a specified set of criteria. However, when using a distributed ledger, retrieving trades information is limited to keyed lookups, making identifying matches more difficult.

To address this, when the platform 120 receives counter party trade recaps, it stores them on chain in a custom queue. The queue rebalances to always return the earliest matching (or latest, depending on the specific requirements of the implementation) opposite side trade recap. The self-ordering queue can be implemented as an immutable contract object in DAML (or any other suitable form of smart contract). The queue does not use any additional object to store the ordering and is self-contained. In one embodiment, the queue is a virtual balancing queue, meaning that it does not need any more data storage nor use any other data structure beyond creating a smart contract for the single-sided trade. In other traditional implementations of a queue, additional data structures are often used with properties such that elements in the queue will be removed in the order it was added. However, the virtual queue is realized through existing smart contracts that are keyed with the iterative key.

To enable efficient lookups from the queue, each side of the trades are keyed with trade economics and an iterative key. An iterative key is one that can be used in an iteration algorithm for searching while also guaranteeing uniqueness. When the platform ingests one side of the trade, the platform 120 performs iterative keyed lookups for other trades with the same economics but with the opposite side. If it finds a match, then the two sides of the trade are matched. The queue rebalances such that if there are multiple potential matches, either the earliest or latest potential match is returned, depending on the specific implementation of the queue. Conversely, if no match is found, then the trade is stored in the virtual balancing queue.

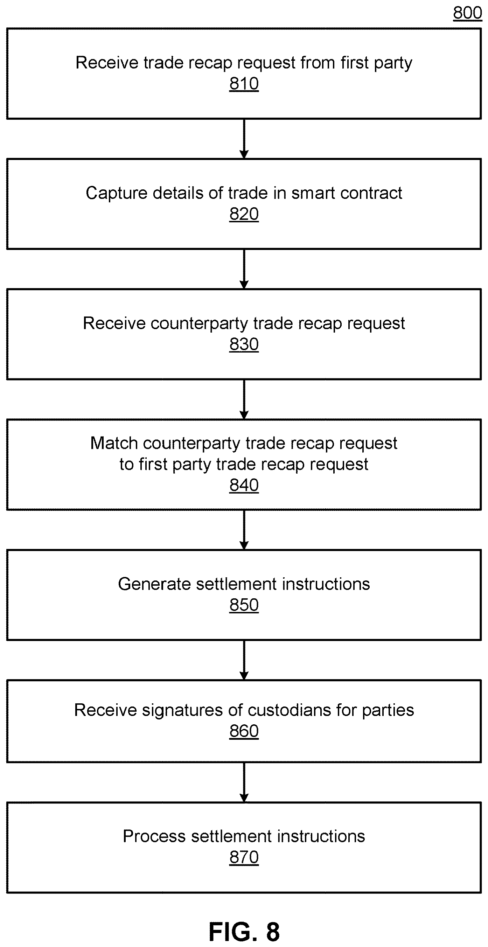

FIG. 8 illustrates an example method 800 for creating a trade recap and processing a transaction, according to one embodiment. In the embodiment shown, the method 800 begins with the secondary trades module 245 receiving 810 a request for a trade recap. As noted previously, either of the parties to the trade may send the request from the trade recap (e.g., using a user interface provided at a client device 140). The secondary trades module 245 captures 820 the details of the trade (e.g., the assets being transferred and the identities of the parties) and creates a trade recap request smart contract. At a later time, the secondary trades module 245 also receives 830 a trade recap request from the counterparty to the trade. The two trade recap requests are matched 840. The settlement generates 850 settlement instructions to implement the trade defined by the matched 840 trade recap requests. The settlement instructions are provided to the custodians for the parties to the trade and, assuming the custodians approve the settlement instructions, the custodians provide their signatures to the secondary trades module 245. On receiving 860 the signatures of the custodians, the secondary trades module 245 causes the settlement agent to process 870 the settlement instructions to credit the appropriate digital assets to the corresponding parties.

If allowed by the relevant regulatory requirements, the platform 120 may provide electronic trading capability to provide better liquidity management post the issuance of the digital assets. For example, the platform 120 may provide one or more of: multilateral continuous order matching, multilateral auction matching, or bilateral or multilateral RFQs and RFT interactions. This may be achieved using an electronic trading engine within the platform 120 or integration with an existing trading engine (e.g., via an API).

Referring once again to FIG. 2, the settlement engine 250 is responsible for the settlement process once a trade is generated. In one embodiment, the generated settlement instructions are signed by both sender and receiver and the trade is settled by the settlement agent. The settlement agent settles the trade atomically, meaning either all assets involved in the trade are transferred or none are. In some embodiments, the settlement instructions can be used to settle even when one of the assets is in a different blockchain. Further details of how hash time-locked contracts (HTLCs) may be used to settle cross-chain transactions can be found in U.S. Patent Application No. 18/205,861, filed June 5, 2023, which is incorporated by reference.

The settlement type may be decided based on the existence of delivery and payment assets and the type of assets. This enables the platform 120 to achieve the following types of settlements atomically: (1) delivery versus payment; (2) free of payment and free of delivery; and (3) delivery versus delivery and payment versus payment. Because the platform 120 allows the representation of assets cross-chain, the settlement process can also support atomically settling a trade across two or more chains.

In various embodiments, the settlement engine 250 uses a settlement agent bot (which may be an always-running bot) to automate the DvP and FoP settlement process. The settlement engine 250 may use some or all of the following processes to provide automated or close to automated atomic settlement:
- Add Settlement Agent To Trade Observers: the lead bank or an operator periodically fetches all of the visible trades in the open state and checks if there is any trade that does not have the settlement agent in the observers list. If such a trade is found, the settlement agent is added to the observers list.
- Create Settlement Instructions: the settlement agent periodically fetches all of the visible trades (both primary issuance trades and secondary trading) in the open state and generates settlement instructions as appropriate.
- Register Readiness for Settlement: the settlement agent periodically fetches all visible delivery/settlement templates attempts to mark them as fully signed by all required parties. This will throw an error if not all the counterparties have signed, meaning the instructions will not actually be implemented prematurely with the need for off-chain checks. This process checks if all settlement instructions for the trade have been signed by both sides. If all those signatures are in place, it means that the trade is ready to settle. If all of the signatures are in place it will set a boolean on any HTLC-locked settlement instructions to indicate that all the signatures are in place. This lets a buyer HTLC-Connector bot, which does not have the ability to check that all parties have provided the required signatures itself, know that everything is ready for execution.
- Settle Trades: the settlement agent periodically fetches all visible delivery/settlement templates and attempts to execute their settlement instruction choices. These will throw an error if not all the counterparties have signed, so the settlement agent can call these instructions, causing those that are ready for execution to be executed while those that are not to remain unexecuted without the need for off-chain checks.
- Automation for Asset Servicing: the settlement agent periodically settles any pending coupon payments.
- Cancel Settlement for Cancelled Trades: the settlement agent periodically fetches all settlements and tries to cancel them. A settlement will get cancelled only if the related trades are cancelled.
- Send Trade Cancel/Advice SWIFT: the settlement agent periodically checks if there is a cancelled trade or a trade where an advice message is required and, if so, sends a swift message if no message was sent before.
- Cancel Invalid Trades: the settlement agent may cancel any trades which can no longer be settled.

In some embodiments, the settlement engine 250 may batch multiple financial/settlement transactions into a single set of settlement instructions that are implemented in a single atomic settlement. This can improve efficiency of the settlement agent 250 and may be desirable in certain scenarios where implementing multiple transactions simultaneously is desirable.

The asset registry and custody module 255 provides DLT-based on-chain registry and custody of digital assets. The wallet/account structure supporting the asset registry and custody can be flexible to support: (1) self-custody or custodian managed; (2) multi-tiered set-up to support custodian and sub-custodian relationship; (3) per-investor/beneficiary owner accounts or omnibus accounts for multiple investors/beneficiary owners; and (4) different wallet/account setups by jurisdiction to provide compliance to local regulations.

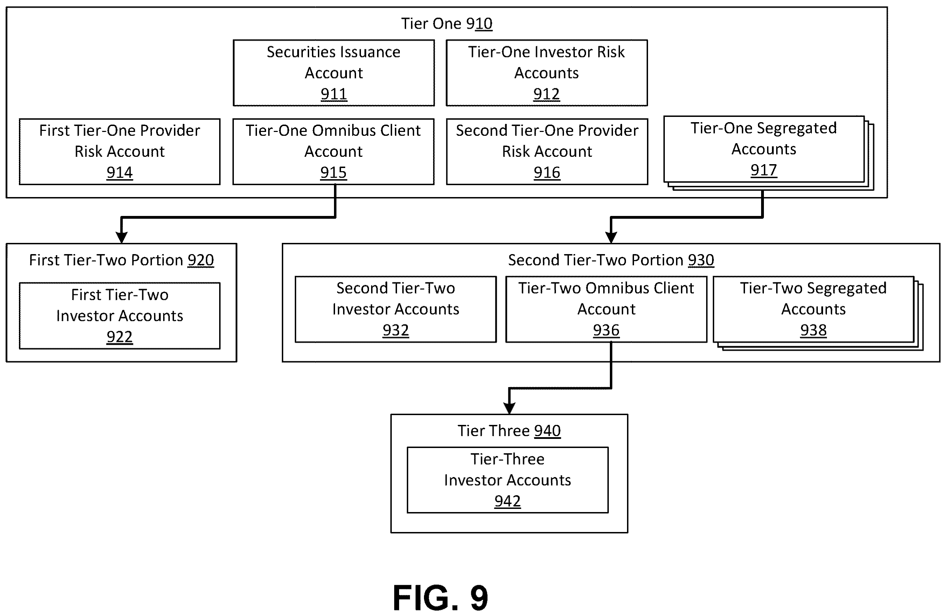

With a multi-tiered approach, the registrar need only keep custody of the accounts it is immediately responsible for and not every account on the platform. It further allows the custodians to self-manage bookkeeping of the accounts they are responsible for. FIG. 9 illustrates one embodiment of a tiered hierarchical account structure which has the custodian holding securities within tier-one accounts and provides claim tokens for digital assets within tier-two accounts. In the embodiment shown, the account structure is arranged in a hierarchy with three tiers. However, there may in principle be any number of tiers within the hierarchy. Each additional tier enables providers holding tokens in the tier above to further split the ownership or beneficial interests represented by those tokens into parts, represented by further tokens in the lower tier. The tiers may all be stored on a single blockchain with permissions being used to control what information each participating entity may view. Alternatively, an entity that has custody of an asset in tier one can operate a separate blockchain to record beneficial interests in the assets over which it has custody.

Tier one 910 of the hierarchical account structure handles digital custody of the assets themselves. Custody of the digital assets is typically limited to a small number of qualified institutional investors depending on jurisdictional requirements (e.g., some jurisdictions do not allow institutional investors to do self-custody). Controls are implemented to only allow the owners of the accounts to transfer / move the assets within the accounts as well as to view the holdings. Tier-one accounts may provide ownership or beneficial interests in the assets over which they have custody to other users, may hold the assets as self-custodians for their own benefit, or both. In the embodiment shown in FIG. 9, tier one 910 includes a securities issuance account 911 (to contain the asset when it is first originated on the ledger), one or more tier-one investor risk accounts 912, a first tier-one provider risk account 914, a tier-one provider omnibus-client account 215, a second tier-one provider risk account 916, and one or more tier-one segregated accounts 917. As described previously, each account may be a blockchain address or wallet or an account defined within the ledger, depending on the DLT technology used. In other embodiments, tier one 910 may include different or additional elements. For example, any number of providers may have risk and omnibus client / segregated accounts in the tier one ledger 910.

The securities issuance account (or securities issuance record) 911 is where the initial issuance of a set of assets is recorded. Thus, information about the assets and the number of assets issued is stored using a smart contract, which may be used for reconciliation against the tier one asset holdings. The securities issuance account 911 is different from a transaction account (used to store the securities). The securities issuance account 911 does not have custody of the assets nor indicate legal ownership of the assets, rather it serves as a registration of the assets.

The tier-one investor risk accounts 912 are for accounts that are authorized to transact in the first-tier ledger 910 (e.g., institutional investors) that wish to self-custody (i.e., hold accounts directly with the registrar) of the asset. The tier-one investor risk accounts 912 hold investor principal positions

In the example shown, there is both a tier-one omnibus client account 915 (which stores tokens for multiple entities in a single account) and one or more tier-one segregated accounts 917 (with each segregated account storing tokens for a single entity). Depending on local regulatory requirements and client preferences, the hierarchy may use just a tier-one omnibus client account 915, only a set of tier-one segregated accounts 917, or a combination of both (e.g., where local law and regulations allow omnibus accounts but one or more clients elect to us segregated accounts). Furthermore, although specific numbers of various types of account are shown, the first tier may include accounts of each type for any number of providers that make investment in the digital assets available to second-tier users.

In some embodiments, providers may have a risk account and a holding account. The purpose of the custodian to hold a risk account and omnibus account is to segregate the clients' custody assets (kept in the client omnibus account) versus its propriety assets (kept in risk account). However, in typical configurations, custodians do not hold proprietary assets and thus do not need (and thus may not have) risk accounts. That said, for the sake of completeness, FIG. 9 shows a first tier-one provider risk account 914 that may hold digital assets that the custodian holds on its firm-capacity and a tier-one provider omnibus client account 915 that has custody over digital assets for which the provider makes ownership or beneficial interests available to second-tier users as well as digital assets over which other tier-one participants have custody. Similarly, the second tier-one provider risk account 916 has custody over digital assets held by the second provider for principal investment. However, the second provider has a tier-one segregated account 917 in which it holds digital assets for which it provides beneficial interests to second-tier users that are segregated from digital assets for which other tier-one participants are the custodian.

Accounts in the second tier hold tokens representing ownership or beneficial interests in the digital assets that sits in the custodian-managed account in tier one 910. The second-tier accounts do not have custody over the digital assets themselves instead they hold claims issued by the respective securities custodian. This may be implemented by an ownership or beneficial interest smart contract that is signed by the custodian account. In the embodiment shown in FIG. 9, the second tier includes a first portion 920 and a second portion 930. Each tier-two portion corresponds to a different custodian in tier one. In one embodiment, the accounts in the tier-two portions 920 and 930 are part of the same ledger that includes the tier-one accounts. Alternatively, some or all of the tier-two accounts may be stored on different ledgers. Note that although the first tier-two portion 920 is shown as branching from tier-one omnibus client account 915 and the second tier-two portion 930 is shown as branching from a tier-one segregated account 917, the tier-two portions may branch off any combination of the tier-one omnibus client account, segregated accounts, or both.

The first tier-two portion 920 is for the first tier-one provider. In this case, the first tier-one provider/custodian safeguards the securities for the tier-two clients by holding the securities in the omnibus account and indicating the ownership or beneficial interests in the digital assets to tier-two accounts using claim tokens issued by the custodian held within the tier-two accounts, but none of those secondary users further divide the ownership or beneficial interests for tier-three accounts. Thus, the accounts in the first tier-two portion 920 hold the digital assets for the tier-two investors. The digital assets holdings in the custodian omnibus account reconciles against the claim tokens that sit in the tier-two investor accounts provided by the custodian. When a tier-two user invests in the digital assets for which the first tier-one provider is a custodian, a token representing an ownership or beneficial interest in the digital assets (or a portion of a digital asset) is added to the tier-two user's account 922.

The second tier-two portion 930 similarly includes second tier-two investor accounts 932 that may store claim tokens (issued by the custodian) representing ownership or beneficial interests in digital assets (or portions of a digital asset) for which the second tier-one provider is custodian. The second tier-two portion 930 can include an omnibus client account 936 that further subdivides the ownership or beneficial interests it holds and makes the parts of the subdivided ownership or beneficial interest available to third-tier investors, tier-two segregated accounts that store tokens representing beneficial interests held by individual tier-two participants, or a combination of both. The tier-two omnibus client account 936 functions similarly to a tier-one omnibus client account (e.g., tier-one omnibus client account 915) except that rather than being a custodian of a digital asset, the tier-two omnibus client account 936 holds ownership or beneficial interests in an asset for multiple tier-two participants, some or all of whom may make ownership or beneficial interests in those interests available to third-tier investors. The tier-two segregated accounts 938 are similar to the tier-one segregated accounts 917 except that they store ownership or beneficial interests of individual tier-two participants, some or all of whom may make ownership or beneficial interests in those interests available to third-tier investors.

Tier three 940 includes accounts 942 of tier-three users that obtain ownership or beneficial interests from a tier-two provider. It should be noted that the tier-three ledger 940 may also include one or more provider accounts that make ownership or beneficial interests in the digital assets available to fourth-tier users, and so on up to an arbitrary number of tiers. An advantage of using the tiered structure shown in FIG. 9 is that it provides privacy control and only allows the account provider to know the clients holding and provides that reconciliation holds between the assets they custody for and the number of claim tokens issued to custody clients. For example, the second tier-one provider may only need to know what ownership or beneficial interests it has given to tier-two users. It may not need to know whether the tier-two users are holding these interests for their own benefit or have further passed them on to tier-three users. Furthermore, as the tier-one users remain custodians of the digital assets, when ownership or beneficial interests are traded on tier two 920 and 930, tier one 910 can remain unchanged. Similarly, tier two 920 and 930 may remain unchanged if beneficial interests are exchanged or traded in tier three 940, etc.

Another advantage of the hierarchical structure is that different tier-two (or lower) portions may be used to provide trading of ownership or beneficial interests in different jurisdictions. Each tier-two portion 920, 930 may be configured to comply with local regulatory requirements for the trading of securities. Thus, tier one 910 may be universal and include custody of the underlying digital assets while tier two can provide trading of securities of the same underlying assets to different markets with different regulatory requirements.

Referring again to FIG. 2, the reconciliation module 260 monitors the different layers of the hierarchy managed by the registry and custody module 255 for discrepancies. There are generally two types of reconciliation check, depending on the specific nature of the assets and configuration of the platform 120: (1) comparing records in different levels of the hierarchy for consistency (e.g., that all of the interests in a type of token recorded in tier two for investors that have accounts with a given custodian match the number of that token that are held in tier one by that custodian); and (2) comparing ownership as indicated o-chain with off-chain records.

In one embodiment, on-chain to on-chain validation is performed by a reconciliation bot that can be used by the registrar and the custodians. When used by the registrar, the bot reconciles the registrar's issuance account (a notional account which keeps a record of unredeemed securities) with the holdings in the tier 1 account the registrar provides on the platform 120. When used by a custodian, the bot reconciles the custodian's tier 2 custody client claims with the custodian's holdings in its tier 1 account (or accounts) provided by the registrar.

In the case of comparing on-chain to off-chain records, the reconciliation module 260 can use an API or other similar function to compare the ownership and beneficial interest in tokens that are stored on-chain with an off-chain records system.

In either case, if a discrepancy is identified, the reconciliation module 260 may activate (e.g., via a smart contract) emergency powers that are available to the registrar to make appropriate corrections (e.g., by issuing revised claim tokens). In one embodiment, the reconciliation module 260 provides two types of emergency error correction capabilities. Generally, these powers are not intended or expected to be invoked on a routine basis, but in exceptional circumstances where a system bug invalidates the consistency of the register that the platform 120 provides.

The first emergency power allows the registrar to create new assets in its securities account and, as custodian, transfer the newly created assets to its tier 1 securities account. The second emergency power enables a custodian to transfer asset claims in or out of the tier-two securities accounts it manages. As the smart contracts that run on the platform 120 define which parties can create or modify them, this functionality requires the affected parties to use their own identities to make corrections. For example, if a custodian other than the operator of the platform 120 needs to move assets, that party's identity (i.e., digital signature and authorization) is required.

The asset model module 265 defines how various assets are represented within the platform. For example, the asset model module 265 can define tokens that correspond to assets using one or more token models. Generally, tokenization can be achieved in two ways: digitally native or tokenized. A digitally native asset is one where the asset is digitized and represented as a smart contract token on-chain. In contrast, a tokenized asset is one where the token is created in another way, external to the chain, and a token is created that represents the asset on-chain. Regardless of the type of asset, it is stored on chain as a smart contract that includes the definition of the asset.

In one embodiment, the platform supports trades three broad types of assets for use in trades: external assets, tokenized digital assets, and wrapped tokens. An external asset can be anything originated externally to the chain, such as fiat cash or assets stored on a different chain. Such assets are provided by the operator of the platform and cannot be minted or burned because they are not primarily stored on the chain used by the platform 120. Tokenized digital assets are digital assets that are native to the platform 120 and thus tokens corresponding to these assets are fully mintable and burnable by the platform and can be provided by any entity with the issuer role, Finally, wrapped tokens are created on-chain by a bridge operator using a wormhole or similar operator and are backed by off-chain assets (possibly assets on a different chain) managed by a third-party that may not be present on the platform 120 but are themselves tokens stored on-chain. Thus, wrapped tokens are mintable and burnable, but minting and burning such tokens may require coordination with the third-party that manages the underlying off-chain asset.

These asset models can be used to support various settlement and payment models in the platform 120, including one or more of: (1) delivery versus payment, payment versus payment, and delivery versus delivery of assets on the same chain (e.g., for mintable/burnable cash and securities tokens); (2) delivery versus payment, payment versus payment, and delivery versus delivery across chains via either HTLC settlement (e.g., for mintable/burnable securities tokens and non-mintable cash tokens which are a representation of cash on a different chain) or continuous settlements (e.g., for mintable/burnable securities tokens and wrapped cash tokens which are a representation of cash tokens on a different chain); (3) free of payment (e.g., for mintable/burnable securities tokens and non-mintable fiat cash tokens); or (4) transfers, such as for payment assets or delivery assets (e.g., for any mintable tokens, such as coupon payments).

The validation module 270 manages verification of the authenticity of smart contracts deployed to the platform 120. In one embodiment, the validation module 270 coordinates with trusted validators to validate smart contracts. In a centralized configuration, any valid contract should have the operator signature as part of them. For a more decentralized setup, the operator role can be shared and distributed across multiple parties, but valid contracts should still be signed by an operator. In a single operator, centralized embodiment, any contract that is not signed by the operator is considered invalid and deals involving such a contract will not be settled. In a multi-operator configuration, the operator role may be assigned on a per-deal basis, and smart contracts involved in a deal may be required to be signed by the entity with the operator role for that deal. Additionally or alternatively, a semi-decentralized configuration may allow per-deal operators to be assigned that can sign smart contracts for the corresponding deal, but there may also be a global operator that can sign any smart contract in its capacity as an operator.

The coupon payment module 275 manages coupon payments for digital debt issuances. Coupon payments are one example of various asset servicing functions that may be provided by the platform 120. Coupon payments may be settled on-chain or off-chain, depending on the specific configuration. Depending on the specific account structure used, typical parties involved in a coupon payment are: (1) a paying agent; (2) a settlement agent; (3) the registrar; and (4) one or more custodians (as well as the debt-holders/investors they are servicing).

On coupon payment day, a bot (in the capacity of the paying agent) initiates the coupon payment flow by interacting with the ledger and identifying if there are payouts due to the investor. The corresponding coupon rates may be stored in an intermediary smart contract which will be referenced by the other participants of the workflow. Subsequently, the registrar begins the process of notifying the custodians in the account hierarchy of the imminent coupon payment so they may identify the positions of their investors, as well as pull positions of its own investors custodian directly with the registrar.

Once initiated, the coupon payments waterfall down through the hierarchy. For example, the issuer may issue the whole net coupon payment to the paying agent, which passes the payment on to the registrar. The registrar may split the coupon payment between one or more custodians that in turn each split their portions of the payment between one or more investors according to the coupon amount.

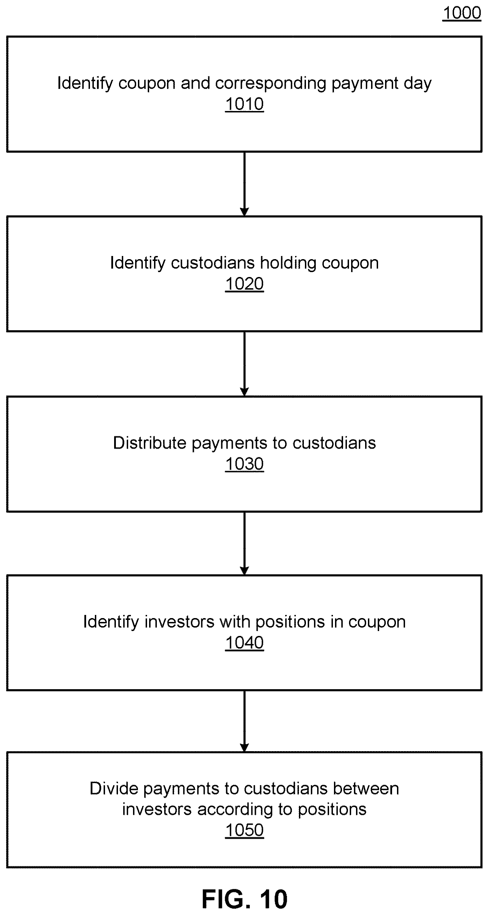

FIG. 10 illustrates an example method 1000 for making coupon payments, according to one embodiment. In the embodiment shown, the method 1000 begins with the coupon payment module 275 identifying 1010 a coupon and corresponding payment date. On or shortly before the payment date, the coupon payment module 275 identifies 1020 custodians with positions in the coupon. On the payment date, the coupon payment module 275 distributes 1030 coupon payments to the custodians according to their positions and the coupon amount.

In addition, on or shortly before the payment date, the coupon payment module 275 notifies the custodians of the pending payment. In response to receiving this notification, the custodians identify 1040 investors with positions in the coupon for which they are acting as custodian. On receiving the coupon payments, each custodian divides 1050 its payment between its investors according to their positions and the amount the custodian received. Although this is described as a two-tiered waterfall payment of registrar to custodians and custodians to investors, it should be appreciated that the payments may flow through any number of levels of a hierarchy. For example, one or more of the investors of a custodian may act as sub-custodians, and further divide the payments they receive to additional investors.

Referring again to FIG. 2, the redemption module 280 provides another example of asset servicing that may be provided by platform 120. Similar to the coupon payment module 275, the redemption module 280 can generate redemption settlement instructions for the digital asset issuance which can be settled either on-chain or off-chain. Depending on the hierarchical account structure, the parties involved are: (1) the paying agent; (2) the settlement agent; (3) the registrar; and (4) one or more custodians. On maturity day, the registrar informs the custodians holding securities accounts at tier one that there has been a maturity/redemption. The custodians then pass on the notifications to the end investors.

The cash payments and burning of tokens can thus be implemented in a waterfall manner through the hierarchy. Specifically, in one embodiment, the payment agent pays the registrar and the securities issuance account goes to zero. The asset description is updated to indicate that the digital asset no longer exists. The registrar pays the custodians and the digital assets that the custodians have custody over with the registrar are burnt by the registrar. The custodians then distribute payments to their clients and burn digital assets on the basis of their arrangements with those clients (typically on distribution of the payments). This process can be expanded given any arbitrarily complex hierarchical custody structure.

The delegation module 285 enables a party to delegate the right to make choices on its behalf in the platform 120 to another party. In one embodiment, delegation is used to break down the entitlements of a party to the department level. For example, the authority to sign settlement instructions for one deal may be delegated to a first department while the authority to sign settlement instructions for another deal may be delegated to a second department. In one embodiment, the delegation module 285 provides two types of delegation: party level delegation and service level delegation.

Party level delegation allows a single user to act as multiple parties. In DAML there are two built-in concepts known as DAML party and DAML user. A DAML party represents an identity that can interact with the ledger by submitting DAML commands which result in the creation of DAML transactions and DAML contracts on the ledger. On the other hand, DAML users are local to a given participant node and are associated with a primary party and a dynamic set of actAs and readAs party/parties. A that which is associated to multiple DAML parties is able to act as these parties and submit DAML commands in these parties' capacity.

For example, an issuer may want to delegate its on-chain party's responsibility to another organization (for, e.g., Bank A and Custodian B). Under this scenario, the Custodian B user rights are defined to act as both the Bank A DAML party and Custodian B DAML party. With these entitlement rights, the Custodian B user is able to make use of Bank A DAML party identity to submit DAML commands (in Bank A capacity) which leads to creation of DAML transactions and DAML contracts (with Bank A party signatory).

Service level delegation is the usage of the on-chain delegation pattern to allow the delegated party the right to exercise a choice (within a service contract) on behalf of another party. As described previously, in some embodiments, each party is allocated to one or more roles. Each of the roles assigned comes with its own service DAML contracts that define the list of allowed actions that this role can perform. Under this setup, an on-chain delegation DAML contract can be created between the principle and delegate party that defines choices to allow the delegated party to make use of the issuer identity to exercise certain service contract choices.

The integration module 290 enables integration of the platform 120 with off-chain systems. In one embodiment, the integration module 290 enables an entity that does not operate a node in the platform 120 to participate in the platform via a node managed by another entity in a manner that still provides the entity confidence that its intentions are being faithfully executed. Specifically, the integration module 290 interacts with an off-chain system of the entity to enable the entity to inspect an API payload that will be submitted to the node being operated on its behalf. The entity can attach its signature using its off-chain system and the integration module 290 retrieve this signature via a webhook. The integration module 290 adds the retrieved signature along with the transaction details to the blockchain in a smart contract. Thus, the entity can verify at any time that the on-chain information matches what it initially signed using the off-chain system.

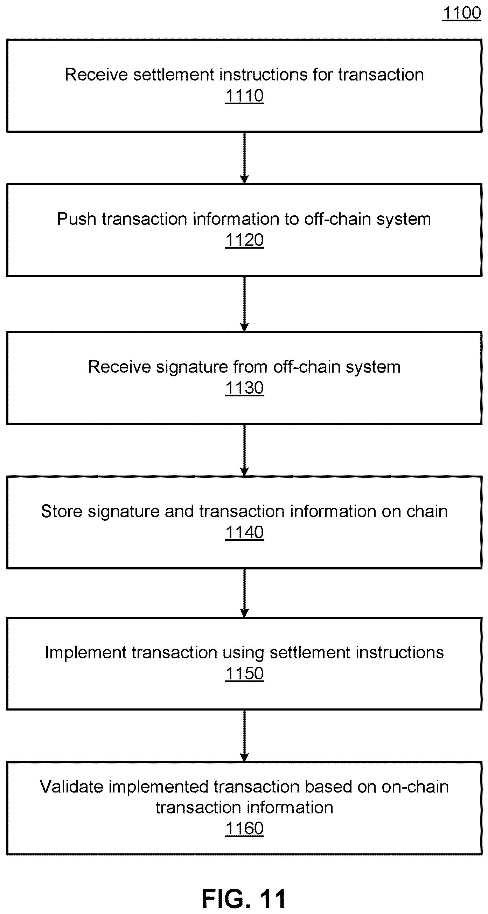

FIG. 11 illustrates an example method 1100 for processing a transaction where one of the parties does not maintains its own node and instead uses an off-chain system to sign the transaction, according to one embodiment. In the embodiment shown, the method 1100 begins with the integration module 290 receiving 1110 settlement instructions for the transaction and pushing 1120 information about the transaction to the off-chain system. Assuming that the off-chain system approves the settlement instructions, the integration module 290 receives 1130 the party's signature from the off-chain system (e.g., via a webhook as described previously). The integration module 290 stores 1140 the signature and transaction information on chain and implements 1150 the transaction according to the settlement instructions. At a later time, the party can validate 1160 the implemented transaction matches its intent using the on-chain transaction information. Any variation between the on-chain transaction information and what the party signed using its off-chain system will be apparent because the signature will not be valid unless the information on-chain matches what was signed off-chain.

Based on the foregoing, it will be apparent to those of ordinary skill in the art that the disclosed platform 120 includes several technological improvements and advantages over existing digital asset transaction systems. Furthermore, the design of the platform 120 is conducive to easy upgrading and modification to meet specific needs.

In one embodiment, the platform 120 makes use of extracted method contracts. An extracted method contract is a smart contract with a choice-implementing function that behaves independently of the contract's state (possibly aside from the datum of the extracted method contract's signatory). For example, an application may deliver the functionality of executing a payment, and part of that functionality is a complex validation that the payment quantity is within a set of the rules (which may specify maximum/minimum/denomination values, or a rule for retrieving these values, etc.). Instead of writing a single DAML contract containing the full implementation logic, the implementation can be split into two contracts: (1) a main DAML contract implementing most of the implementation logic; and (2) a separate DAML contract (in a separate DAR) implementing the payment quantity validation piece. The main contract can either call out to the validation contract to synchronously assert the validity, or it can wait for the validation contract to send an attestation of validity (note the "wait" is not necessarily asynchronous in practice).

The advantage of this pattern is that an upgrade can be executed with only a few contract replacements (of the extract method contract(s)), with fewer replacements than replacing every application contract, because multiple instances of the application contract can share a single instance of the extracted method contract. The minimum number of extracted method contract instances is therefore one, and the minimum number of extracted method contracts needed to do this with no additional data disclosure equals the number of nodes in the platform 120.

Another design feature that is used in some embodiments to provide upgradability are retroactive upgrading interfaces implemented using DAML templates. These retroactive upgrading interfaces may perform a complete upgrade without requiring any actions from anyone other than node operators. Furthermore, this approach enables upgrades that are highly flexible with regard to how the code is written, with few if any requirements for structure and content of the code.

For templates being upgraded with no schema change, a single retroactive interface that has a choice "upgrade," with the controller being a single party, can be written and retroactively implemented on all of those templates. For templates that are having a schema change, a separate retroactive interface contract can be written for every such schema-changing template, with a single choice, "upgrade," with appropriate parameters as necessary for the schema conversion logic and for additional data, again with only a single party as controller.

Once the DAR full of upgrader retroactive interfaces has been created, published, and uploaded to nodes, the DAML contracts upgrading process proceeds automatically. The upgraders' choices have only a single controller, removing the need to coordinate and accumulate signatures from parties on different nodes using conventional "upgrade proposal" contracts. Instead, each upgrade contract uses a single method call with the authority of a single party. Therefore, the number of operations required is equal to the number of contract instances across all templates across all DARs being updated. This is significantly less operations than is typically required using conventional upgrade approaches.

In one embodiment, coordination of the upgrade process includes each node uploading the DAR of the new version of the package and the DAR of upgrader retroactive interfaces. Each node operator naturally knows which templates they are responsible for upgrading because the upgrader retroactive interfaces define rule(s) that identify, for every contract, a specific party expected to do the upgrade, and the node operator knows if that party is hosted on their node or not. Each node operator can award themselves an "act as" token for any party hosted on their node. On an agreed schedule, which may be a rolling or A/B approach, node operators upgrade contract instances. The node operators give themselves an "ActAs" token as the party responsible for upgrading that contract, call the "upgrade" method, and, if the "upgrade" method includes handling a schema change that requires parameters, provide the required parameters.

### COMPUTING SYSTEM ARCHITECTURE

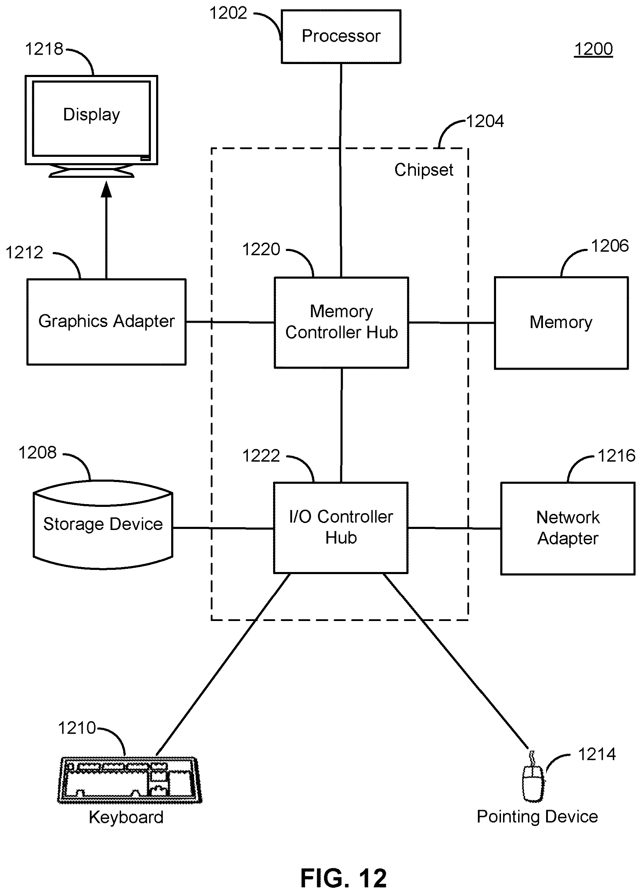

FIG. 12 illustrates an example computer 1200 suitable for use as part of the digital assets platform 120, a client device 140, or a distributed node 112 or 114, according to one embodiment. The example computer 1200 includes at least one processor 1202 coupled to a chipset 1204. For convenience, various operations may be described as being performed by "a processor 1202." It should be understood that this means that the stated operations are performed by one or more processors working either individually or cooperatively. The chipset 1204 includes a memory controller hub 1220 and an input/output (I/O) controller hub 1222. A memory 1206 and a graphics adapter 1212 are coupled to the memory controller hub 1220, and a display 1218 is coupled to the graphics adapter 1212. A storage device 1208, keyboard 1210, pointing device 1214, and network adapter 1216 are coupled to the I/O controller hub 1222. Other embodiments of the computer 1200 have different architectures.

In the embodiment shown in FIG. 12, the storage device 1208 is a non-transitory computer-readable storage medium such as a hard drive, compact disk read-only memory (CD-ROM), DVD, or a solid-state memory device. The memory 1206 holds instructions, e.g., to perform the methods described above, and data used by the processor 1202. The pointing device 1214 may be a mouse, track ball, touchscreen, or any other type of pointing device, and may be used in combination with the keyboard 1210 (which may be an on-screen keyboard) to input data into the computer system 1200. The graphics adapter 1212 causes images and other information to be displayed on the display 1218. The network adapter 1216 couples the computer system 1200 to one or more computer networks (e.g., network 190). The types of computers used by the entities of FIG. 1 can vary depending upon the embodiment and the processing power required by the entity. Furthermore, the computers can lack some of the components described above, such as keyboards 1210, graphics adapters 1212, and displays 1218.

### ADDITIONAL CONSIDERATIONS

Some portions of above description describe the embodiments in terms of algorithmic processes or operations. These algorithmic descriptions and representations are commonly used by those skilled in the computing arts to convey the substance of their work effectively to others skilled in the art. These operations, while described functionally, computationally, or logically, are understood to be implemented by computer programs comprising instructions for execution by a processor or equivalent electrical circuits, microcode, or the like. Furthermore, it has also proven convenient at times, to refer to these arrangements of functional operations as modules, without loss of generality.

As used herein, any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment. Similarly, use of "a" or "an" preceding an element or component is done merely for convenience. This description should be understood to mean that one or more of the element or component is present unless it is obvious that it is meant otherwise.

Where values are described as "approximate" or "substantially" (or their derivatives), such values should be construed as accurate +/- 10% unless another meaning is apparent from the context. From example, "approximately ten" should be understood to mean "in a range from nine to eleven."

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Upon reading this disclosure, those of skill in the art will appreciate still additional alternative structural and functional designs for a system and a process for providing end-to-end registry, custody, issuance, trading, settlement, and servicing of digital assets and tokenized assets. Thus, while particular embodiments and applications have been illustrated and described, it is to be understood that the described subject matter is not limited to the precise construction and components disclosed. The scope of protection should be limited only by any claims that may ultimately issue. Various examples are set out in the following numbered paragraphs (NPs):
NP 1. A computer-implemented method comprising:
   receiving an origination request identifying a digital asset;
   retrieving asset origination information describing the digital asset;
   storing, in an origination smart contract on a distributed ledger, a description of the digital asset that is derived from the asset origination information;
   receiving an asset issuance request;
   retrieving, responsive to the asset issuance request, the description of the digital asset; and
   creating one or more instances of the digital asset on the distributed ledger.
NP 2. The computer-implemented method of NP 1, further comprising:
   receiving a definition of the digital asset; and
   creating, using the definition, the origination smart contract, wherein storing the description of the digital asset comprises committing the asset origination smart contract to the distributed ledger.
NP 3. The computer-implemented method of NP 1, wherein retrieving the description of the digital asset comprises:
   receiving an identifier of the origination smart contract; and
   querying the distributed ledger using the identifier of the origination smart contract to identify the description of the digital asset.
NP 4. The computer-implemented method of NP 1, wherein creating the one or more instances of the digital asset on the distributed ledger comprises:
   creating an asset deposit smart contract in an account of the issuer; and
   creating an issuance smart contract in a securities issuance account.
NP 5. The computer-implemented method of NP 1, further comprising verifying that an amount of instances of the digital asset indicated in the account of the issuer matches an amount of instances of the digital asset indicated in the securities issuance account.
NP 6. The computer-implemented method of NP 1, further comprising:
   requesting approval of the origination request from a registrar; and
   receiving approval of the origination request by the registrar, wherein the description of the digital asset is stored in response to receiving the approval of the origination request.
NP 7. The computer-implemented method of NP 6, wherein requesting the approval of the origination request comprise creating an approval smart contract and receiving approval of the origination smart contract comprises receiving an indication that the registrar has signed the approval smart contract.
NP 8. The computer-implemented method of NP 1, further comprising:
   requesting approval of the asset issuance request from a registrar; and
   receiving approval of the asset issuance request by the registrar, wherein the one or more instances of the digital asset are created in response to receiving the approval of the asset issuance request.
NP 9. The computer-implemented method of NP 8, wherein requesting the approval of the asset issuance request comprise creating an approval smart contract and receiving approval of the asset issuance smart contract comprises receiving an indication that the registrar has signed the approval smart contract.
NP 10. The computer-implemented method of NP 1, wherein the distributed ledger comprises a blockchain.
NP 11. The computer-implemented method of NP 1, wherein the asset origination smart contract is a DAML smart contract.
NP 12. A non-transitory computer-readable medium comprising stored instructions that, when executed, cause a computing system to perform operations including:
   receiving an origination request identifying a digital asset;
   retrieving asset origination information describing the digital asset;
   storing, in an origination smart contract on a distributed ledger, a description of the digital asset that is derived from the asset origination information;
   receiving an asset issuance request;
   retrieving, responsive to the asset issuance request, the description of the digital asset; and
   creating one or more instances of the digital asset on the distributed ledger.
NP 13. The non-transitory computer-readable medium of NP 12, wherein the operations further include:
   receiving a definition of the digital asset; and
   creating, using the definition, the origination smart contract, wherein storing the description of the digital asset comprises committing the asset origination smart contract to the distributed ledger.
NP 14. The non-transitory computer-readable medium of NP 12, wherein retrieving the description of the digital asset comprises:
   receiving an identifier of the origination smart contract; and
   querying the distributed ledger using the identifier of the origination smart contract to identify the description of the digital asset.
NP 15. The non-transitory computer-readable medium of NP 12, wherein creating the one or more instances of the digital asset on the distributed ledger comprises:
   creating an asset deposit smart contract in an account of the issuer; and
   creating an issuance smart contract in a securities issuance account.
NP 16. The non-transitory computer-readable medium of NP 12, wherein the operations further include verifying that an amount of instances of the digital asset indicated in the account of the issuer matches an amount of instances of the digital asset indicated in the securities issuance account.
NP 17. The non-transitory computer-readable medium of NP 12, wherein the operations further include:
   requesting approval of the origination request from a registrar; and
   receiving approval of the origination request by the registrar, wherein the description of the digital asset is stored in response to receiving the approval of the origination request.
NP 18. The non-transitory computer-readable medium of NP 17, wherein requesting the approval of the origination request comprise creating an approval smart contract and receiving approval of the origination smart contract comprises receiving an indication that the registrar has signed the approval smart contract.
NP 19. The non-transitory computer-readable medium of NP 12, wherein the operations firther include:
   requesting approval of the asset issuance request from a registrar; and
   receiving approval of the asset issuance request by the registrar, wherein the one or more instances of the digital asset are created in response to receiving the approval of the asset issuance request.
NP 20. The non-transitory computer-readable medium of NP 19, wherein requesting the approval of the asset issuance request comprise creating an approval smart contract and receiving approval of the asset issuance smart contract comprises receiving an indication that the registrar has signed the approval smart contract.
NP 21. A computer-implemented method comprising:
   identifying an entitlement and a corresponding date on which the entitlement is due;
   identifying interests in the entitlement held by custodians in a first tier of hierarchy of interests in the entitlement, the hierarchy stored in a distributed ledger; and
   distributing, on the date the entitlement is due, portions of the entitlement to the custodians according to the custodians' interests in the entitlement, wherein at least some of the custodians identify investors that have interests in the entitlement in a second tier of the hierarchy and distribute their portions of the entitlement to the investors according to the investors' interests in the entitlement.
NP 22. The computer-implemented method of NP 21, further comprising:
   identifying, by at least some of the investors, additional investors that have interests in the entitlement in a third tier of the hierarchy; and
   distributing, by the at least some of the investors, corresponding portions of the entitlement to the additional investors according to the additional investors' interests in the entitlement.
NP 23. The computer-implemented method of NP 21, wherein the entitlement is a coupon payment.
NP 24. The computer-implemented method of NP 21, wherein the interests in the entitlement are represented by claim tokens on the distributed ledger.
NP 25. The computer-implemented method of NP 21, wherein the distributed ledger comprises a blockchain.
NP 26. The computer-implemented method of NP 25, wherein the blockchain is a permissioned blockchain and smart contracts are used to represent the interests in the entitlement such that participants can only view interests to which they are entitled or for which they are responsible.
NP 27. The computer-implemented method of NP 25, wherein the distributed ledger further comprises a second blockchain, with interests in the first tier of the hierarchy being stored on the blockchain and interests in the second tier of the hierarchy being stored on the second blockchain.
NP 28. The computer-implemented method of NP 21, further comprising providing a notification to at least one of the custodians that the entitlement will be paid before payment of the entitlement, wherein the at least one of the custodians identifies the investors that have interests in the entitlement, before payment of the entitlement, in response to the notification.
NP 29. A non-transitory computer-readable medium comprising stored instructions that, when executed by a computing system, cause the computing system to perform operations including:
   identifying an entitlement and a corresponding date on which the entitlement is due;
   identifying interests in the entitlement held by custodians in a first tier of hierarchy of interests in the entitlement, the hierarchy stored in a distributed ledger; and
   distributing, on the date the entitlement is due, portions of the entitlement to the custodians according to the custodians' interests in the entitlement, wherein at least some of the custodians identify investors that have interests in the entitlement in a second tier of the hierarchy and distribute their portions of the entitlement to the investors according to the investors' interests in the entitlement.
NP 30. The non-transitory computer-readable medium of NP 29, wherein the operations further include:
   identifying, by at least some of the investors, additional investors that have interests in the entitlement in a third tier of the hierarchy; and
   distributing, by the at least some of the investors, corresponding portions of the entitlement to the additional investors according to the additional investors' interests in the entitlement.
NP 31. The non-transitory computer-readable medium of NP 29, wherein the entitlement is a coupon payment.
NP 32. The non-transitory computer-readable medium of NP 29, wherein the interests in the entitlement are represented by claim tokens on the distributed ledger.
NP 33. The non-transitory computer-readable medium of NP 29, wherein the distributed ledger comprises a blockchain.
NP 34. The non-transitory computer-readable medium of NP 33, wherein the blockchain is a permissioned blockchain and smart contracts are used to represent the interests in the entitlement such that participants can only view interests to which they are entitled or for which they are responsible.
NP 35. The non-transitory computer-readable medium of NP 33, wherein the distributed ledger further comprises a second blockchain, with interests in the first tier of the hierarchy being stored on the blockchain and interests in the second tier of the hierarchy being stored on the second blockchain.
NP 36. The non-transitory computer-readable medium of NP 29, wherein the operations further include providing a notification to at least one of the custodians that the entitlement will be paid before payment of the entitlement, wherein the at least one of the custodians identifies the investors that have interests in the entitlement, before payment of the entitlement, in response to the notification.
NP 37. A computing system comprising:
   one or more processors; and
   memory storing instructions that, when executed by the one or more processors, cause the computing system to perform operations including:
      identifying an entitlement and a corresponding date on which the entitlement is due;
      identifying interests in the entitlement held by custodians in a first tier of hierarchy of interests in the entitlement, the hierarchy stored in a distributed ledger; and
      distributing, on the date the entitlement is due, portions of the entitlement to the custodians according to the custodians' interests in the entitlement, wherein at least some of the custodians identify investors that have interests in the entitlement in a second tier of the hierarchy and distribute their portions of the entitlement to the investors according to the investors' interests in the entitlement.
NP 38. The computing system of NP 37, wherein the operations further include:
   identifying, by at least some of the investors, additional investors that have interests in the entitlement in a third tier of the hierarchy; and
   distributing, by the at least some of the investors, corresponding portions of the entitlement to the additional investors according to the additional investors' interests in the entitlement.
NP 39. The computing system of NP 37, wherein the distributed ledger is a permissioned blockchain and smart contracts are used to represent the interests in the entitlement such that participants can only view interests to which they are entitled or for which they are responsible.
NP 40. The computing system of NP 37, wherein the distributed ledger comprises a first blockchain and a second blockchain, with interests in the first tier of the hierarchy being stored on the first blockchain and interests in the second tier of the hierarchy being stored on the second blockchain.
NP 41. A computer-implemented method comprising:
   receiving a first trade recap request from a first party to a trade;
   capturing details of the trade in a smart contract stored on a distributed ledger;
   receiving a second trade recap request from a second party to the trade;
   matching the first trade recap request to the second trade recap request;
   generating, responsive to the matching, settlement instructions to implement the trade; receiving signatures of custodians of the first party and the second party; and
   processing the settlement instructions.
NP 42. The computer-implemented method of NP 41, wherein matching the first trade recap request and the second trade recap request is implemented using a balancing queue.
NP 43. The computer-implemented method of NP 42, wherein the balancing queue is implemented using an immutable smart contract.
NP 44. The computer-implemented method of NP 42, wherein the balancing queue is a virtual balancing queue implemented without any additional object to store ordering of the trade recap requests.
NP 45. The computer-implemented method of NP 42, wherein the first and second trade recap requests are keyed in the balancing queue with trade economics and an iterative key.
NP 46. The computer-implemented method of NP 45, wherein matching the first trade recap request to the second trade recap request comprises, responsive to receiving the second trade recap request, performing iterative keyed lookups for other trades with matching economics until the first trade recap request is identified.
NP 47. The computer-implemented method of NP 46, wherein the balancing queue rebalances such that the first trade recap request is an earliest or a latest matching trade recap request of a plurality of possible matching trade recap requests for the second trade recap request.
NP 48. The computer-implemented method of NP 41, further comprising:
   responsive to receiving the first trade recap request, querying a virtual balancing queue for a matching trade recap request;
   responsive to not finding a matching trade recap request, adding the first trade recap request to the virtual balancing queue.
NP 49. The computer-implemented method of NP 41, wherein receiving the signatures of the custodians comprises the custodians signing a smart contract with their digital signatures.
NP 50. A non-transitory computer-readable medium comprising stored instructions that, when executed, cause a computing system to perform operations including:
   receiving a first trade recap request from a first party to a trade;
   capturing details of the trade in a smart contract stored on a distributed ledger;
   receiving a second trade recap request from a second party to the trade;
   matching the first trade recap request to the second trade recap request;
   generating, responsive to the matching, settlement instructions to implement the trade; receiving signatures of custodians of the first party and the second party; and processing the settlement instructions.
NP 51. The non-transitory computer-readable medium of NP 50, wherein matching the first trade recap request and the second trade recap request is implemented using a balancing queue.
NP 52. The non-transitory computer-readable medium of NP 51, wherein the balancing queue is implemented using an immutable smart contract.
NP 53. The non-transitory computer-readable medium of NP 51, wherein the balancing queue is a virtual balancing queue implemented without any additional object to store ordering of the trade recap requests.
NP 54. The non-transitory computer-readable medium of NP 51, wherein the first and second trade recap requests are keyed in the balancing queue with trade economics and an iterative key.
NP 55. The non-transitory computer-readable medium of NP 54, wherein matching the first trade recap request to the second trade recap request comprises, responsive to receiving the second trade recap request, performing iterative keyed lookups for other trades with matching economics until the first trade recap request is identified.
NP 56. The non-transitory computer-readable medium of NP 55, wherein the balancing queue rebalances such that the first trade recap request is an earliest or a latest matching trade recap request of a plurality of possible matching trade recap requests for the second trade recap request.
NP 57. The non-transitory computer-readable medium of NP 50, wherein the operations further include:
   responsive to receiving the first trade recap request, querying a virtual balancing queue for a matching trade recap request;
   responsive to not finding a matching trade recap request, adding the first trade recap request to the virtual balancing queue.
NP 58. The non-transitory computer-readable medium of NP 50, wherein receiving the signatures of the custodians comprises the custodians signing a smart contract with their digital signatures.
NP 59. A system comprising:
   one or more processors; and
   memory storing instructions that, when executed by the one or more processors, cause the computing system to perform operations including:
      receiving a first trade recap request from a first party to a trade;
      capturing details of the trade in a smart contract stored on a distributed ledger; receiving a second trade recap request from a second party to the trade;
      matching the first trade recap request to the second trade recap request;
      generating, responsive to the matching, settlement instructions to implement the trade;
      receiving signatures of custodians of the first party and the second party; and
      processing the settlement instructions.
NP 60. The system of NP 59, wherein matching the first trade recap request and the second trade recap request is implemented using a balancing queue, the first and second trade recap requests being keyed in the balancing queue with trade economics and an iterative key, and wherein matching the first trade recap request to the second trade recap request comprises, responsive to receiving the second trade recap request, performing iterative keyed lookups for other trades with matching economics until the first trade recap request is identified, the balancing queue being rebalanced such that the first trade recap request is an earliest or a latest matching trade recap request of a plurality of possible matching trade recap requests for the second trade recap request.
NP 61. A computer-implemented method comprising:
   receiving settlement instructions for a transaction involving a party;
   pushing information about the transaction to an off-ledger system associated with the party;
   receiving a digital signature of the party from the off-ledger system; and
   responsive to receiving the digital signature of the party, implementing the transaction using the settlement instructions.
NP 62. The computer-implemented method of NP 61, wherein the distributed ledger is a blockchain.
NP 63. The computer-implemented method of NP 61, further comprising storing the digital signature and the information about the transaction in a smart contract on a distributed ledger.
NP 64. The computer-implemented method of NP 63, further comprising validating the implementation of the transaction using the information about the transaction stored in the smart contract on the distributed ledger
NP 65. The computer-implemented method of NP 64, wherein validating the implementation of the transaction comprise comparing the information about the transaction that was pushed to the off-ledger system to the information about the transaction stored in the smart contract on the distributed ledger.
NP 66. The computer-implemented method of NP 61, wherein the party does not operate a node of the distributed ledger and a second party operates a node of the distributed ledger on behalf of the party.
NP 67. The computer-implemented method of NP 61, wherein receiving the digital signature of the party comprises retrieving the digital signature using a webhook of the off-ledger system.
NP 68. A non-transitory computer-readable medium comprising stored instructions that, when executed, cause a computing system to perform operations including:
   receiving settlement instructions for a transaction involving a party;
   pushing information about the transaction to an off-ledger system associated with the party;
   receiving a digital signature of the party from the off-ledger system; and responsive to receiving the digital signature of the party, implementing the transaction using the settlement instructions.
NP 69. The non-transitory computer-readable medium of NP 68, wherein the distributed ledger is a blockchain.
NP 70. The non-transitory computer-readable medium of NP 68, wherein the operations further include storing the digital signature and the information about the transaction in a smart contract on a distributed ledger.
NP 71. The non-transitory computer-readable medium of NP 70, wherein the operations further include validating the implementation of the transaction using the information about the transaction stored in the smart contract on the distributed ledger
NP 72. The non-transitory computer-readable medium of NP 71, wherein validating the implementation of the transaction comprise comparing the information about the transaction that was pushed to the off-ledger system to the information about the transaction stored in the smart contract on the distributed ledger.
NP 73. The non-transitory computer-readable medium of NP 68, wherein the party does not operate a node of the distributed ledger and a second party operates a node of the distributed ledger on behalf of the party.
NP 74. The non-transitory computer-readable medium of NP 68, wherein receiving the digital signature of the party comprises retrieving the digital signature using a webhook of the off-ledger system.
NP 75. A system comprising:
   one or more processors; and
   memory storing instructions that, when executed by the one or more processors, cause the computing system to perform operations including:
      receiving settlement instructions for a transaction involving a party;
      pushing information about the transaction to an off-ledger system associated with the party;
      receiving a digital signature of the party from the off-ledger system; and responsive to receiving the digital signature of the party, implementing the transaction using the settlement instructions.
NP 76. The system of NP 75, wherein the operations further include storing the digital signature and the information about the transaction in a smart contract on a distributed ledger.
NP 77. The system of NP 76, wherein the operations further include validating the implementation of the transaction using the information about the transaction stored in the smart contract on the distributed ledger
NP 78. The system of NP 77, wherein validating the implementation of the transaction comprise comparing the information about the transaction that was pushed to the off-ledger system to the information about the transaction stored in the smart contract on the distributed ledger.
NP 79. The system of NP 75, wherein the party does not operate a node of the distributed ledger and a second party operates a node of the distributed ledger on behalf of the party.
NP 80. The system of NP 75, wherein receiving the digital signature of the party comprises retrieving the digital signature using a webhook of the off-ledger system.

## Claims

1. A computer-implemented method comprising:
receiving an origination request identifying a digital asset;
retrieving asset origination information describing the digital asset;
storing, in an origination smart contract on a distributed ledger, a description of the digital asset that is derived from the asset origination information;
receiving an asset issuance request;
retrieving, responsive to the asset issuance request, the description of the digital asset; and
creating one or more instances of the digital asset on the distributed ledger.

2. The computer-implemented method of claim 1, further comprising:
receiving a definition of the digital asset; and
creating, using the definition, the origination smart contract, wherein storing the description of the digital asset comprises committing the asset origination smart contract to the distributed ledger.

3. The computer-implemented method of claim 1, wherein retrieving the description of the digital asset comprises:
receiving an identifier of the origination smart contract; and
querying the distributed ledger using the identifier of the origination smart contract to identify the description of the digital asset.

4. The computer-implemented method of claim 1, wherein creating the one or more instances of the digital asset on the distributed ledger comprises:
creating an asset deposit smart contract in an account of the issuer; and
creating an issuance smart contract in a securities issuance account.

5. The computer-implemented method of claim 1, further comprising verifying that an amount of instances of the digital asset indicated in the account of the issuer matches an amount of instances of the digital asset indicated in the securities issuance account.

6. The computer-implemented method of claim 1, further comprising:
requesting approval of the origination request from a registrar; and
receiving approval of the origination request by the registrar, wherein the description of the digital asset is stored in response to receiving the approval of the origination request.

7. The computer-implemented method of claim 6, wherein requesting the approval of the origination requests comprise creating an approval smart contract and receiving approval of the origination smart contract comprises receiving an indication that the registrar has signed the approval smart contract.

8. The computer-implemented method of claim 1, further comprising:
requesting approval of the asset issuance request from a registrar; and
receiving approval of the asset issuance request by the registrar, wherein the one or more instances of the digital asset are created in response to receiving the approval of the asset issuance request.

9. The computer-implemented method of claim 8, wherein requesting the approval of the asset issuance request comprises creating an approval smart contract and receiving approval of the asset issuance smart contract comprises receiving an indication that the registrar has signed the approval smart contract.

10. The computer-implemented method of claim 1, wherein the distributed ledger comprises a blockchain.

11. The computer-implemented method of claim 1, wherein the asset origination smart contract is a DAML smart contract.

12. A system arranged to carry out the method of any one of the preceding claims.

13. A computer program that, when executed by one or more processors, causes the one or more processors to carry out the method of any one of claims 1 to 11.

14. A computer readable medium storing the computer program of claim 13.
